# DEMANDE DE BREVET EUROPEEN

(11) **EP 0 892 295 A1**
(43) Date de publication de la demande: **20.01.1999**
(21) Numéro de dépôt: 98401769.9
(22) Date de dépôt: 13.07.1998
(51) Int. Cl.: G02B 6/44

(54) **Procédé de fabrication de rubans de fibres optiques**

(30) Priorité: 17.07.1997 FR 9709066
(71) Demandeur: ALCATEL ALSTHOM COMPAGNIE GENERALE D'ELECTRICITE, 75008 Paris (FR)
(72) Inventeur: Yang, Michael, NE Conover, NC 28613 (US); Bourghelle, Patrick, Hickory, NC 28601 (US)
(74) Mandataire: Feray, Valérie

(57) **Abrégé**

Dans le procédé de fabrication, les fibres optiques (2) sont distribuées par une unité de distribution (3) de fibres optiques et regroupées dans une buse (6) où elles sont enrobées par un matériau d'enrobage qui est durci pour former un ruban (1) de fibres optiques (2).

L'on forme en parallèle plusieurs groupes (10) de fibres optiques dans autant de buses (6) et l'on durcit simultanément ces groupes de fibres optiques enrobées du matériau d'enrobage à travers un unique moyen de durcissement (8) du matériau d'enrobage pour former autant de rubans (1) de fibres optiques (2), ce qui permet de réduire le coût de fabrication d'un ruban.

## Description

L'invention concerne un procédé de fabrication de rubans de fibres optiques dans lequel les fibres optiques sont distribuées par une unité de distribution de fibres optiques et regroupées dans une buse où elles sont enrobées par un matériau d'enrobage qui est durci pour former un ruban de fibres optiques.

De manière connue, avec une tel procédé de fabrication où l'on fabrique un seul ruban, les fibres optiques sont distribuées par des bobines montées en rotation sur une unité d'alimentation. Elles sont ensuite guidées par une poulie et regroupées parallèlement les unes et autres dans une buse elle même alimentée par un matériau d'enrobage qui se dépose autour des fibres en formant une couche continue. Les fibres enrobées défilent ensuite dans une enceinte destinée à durcir le matériau d'enrobage et à former ainsi un ruban qui est réceptionné sur une unité de réception par l'intermédiaire d'un cabestan.

Les rubans sont utilisés dans des câbles qui présentent de nombreux intérêts par rapport aux câbles à fibres optiques indépendantes ou tressées, parmi lesquels il faut citer une densité élevée en fibres optiques et des opérations de raccordement facilitées par une disposition ordonnées des fibres les unes par rapport aux autres.

L'augmentation de capacités de production de ce type de câbles est un enjeux industriel important. Au plan économique, il peut paraître intéressant d'élever la vitesse de défilement des fibres optiques lors de la fabrication. Cependant l'inertie mécanique des bobines, de la poulie au niveau de laquelle sont guidées les fibres optiques, et du cabestan, ainsi que les vibrations des fibres optiques le long de leur trajet, limitent l'augmentation de la vitesse. La solution consistant à multiplier les installations du procédé pour la fabrication de plusieurs rubans est possible au plan technique, mais présente de nombreux inconvénients économiques parmi lesquels un coût d'investissement élevé et un encombrement au sol important.

Le but de l'invention est de fournir un procédé pour fabriquer simultanément plusieurs rubans de fibres optiques en parallèle pour un coût de fabrication par ruban inférieur à celui résultant d'une simple multiplication des installations de fabrication.

A cet effet, l'invention a pour objet un procédé de fabrication de rubans de fibres optiques dans lequel les fibres optiques sont distribuées par une unité de distribution de fibres optiques et regroupées dans une buse où elles sont enrobées par un matériau d'enrobage qui est durci pour former un ruban de fibres optiques, caractérisé en ce que l'on forme en parallèle plusieurs groupes de fibres optiques dans autant de buses et que l'on durcit simultanément ces groupes de fibres optiques enrobées du matériau d'enrobage à travers un unique moyen de durcissement du matériau d'enrobage pour former autant de rubans de fibres optiques.

L'énergie nécessaire au durcissement du matériau d'enrobage est apportée simultanément aux rubans fabriqués en parallèle. L'étape de durcissement étant la plus coûteuse du procédé de fabrication, le procédé selon l'invention permet de minimiser la dépense énergétique par ruban.

L'encombrement au sol n'est guère plus important que celui d'un procédé unitaire, dans la mesure où le même moyen de durcissement est commun à la fabrication des rubans.

D'autres caractéristiques et avantages de l'invention apparaîtront à la lecture de la description illustrée par les dessins.

La figure 1 est une vue de face d'un dispositif mettant en oeuvre le procédé de fabrication selon l'invention

La figure 2 est une vue en coupe de sept rubans fabriqués simultanément dans un arrangement en colonne et comportant chacun douze fibres optiques.

La figure 3 est une vue en coupe de douze rubans fabriqués simultanément dans un arrangement en colonne et comportant chacun douze fibres optiques.

La figure 4 est une vue en coupe de deux rubans fabriqués simultanément dans un arrangement en ligne et comportant chacun douze fibres optiques.

La figure 5 est une vue en coupe de trois rubans fabriqués simultanément dans un arrangement en ligne et comportant chacun douze fibres optiques.

La figure 6 est une vue de face d'un dispositif mettant en oeuvre le procédé selon l'invention dans lequel une réception des rubans est réalisée par une unité de réception unique.

Le procédé selon l'invention comprend une première étape au cours de laquelle des fibres optiques sont distribuées par une unité de distribution de fibres optiques et regroupées dans une buse où elles sont enrobées par un matériau d'enrobage qui est durci pour former un ruban de fibres optiques.

Dans la suite de la description, les termes amont et aval, ou entrée et sortie, se réfèrent à un sens de défilement des fibres optiques de départ en direction des rubans. Un même élément représenté sur plusieurs figures conserve la même référence.

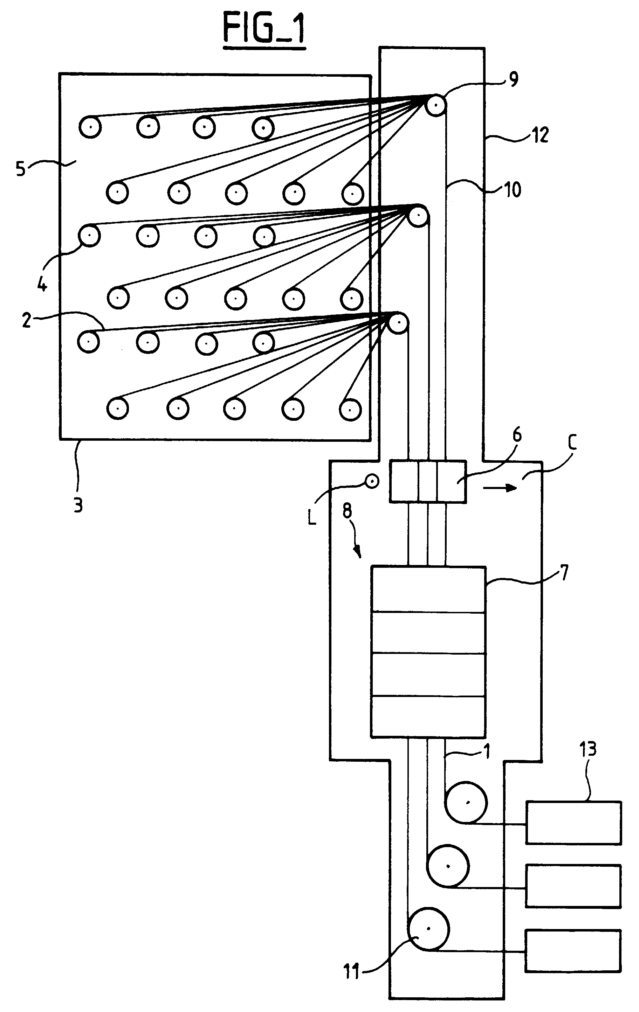

Sur la figure 1, vingt-sept fibres optiques 2 sont distribuées par vingt-sept bobines de distribution 4 montées en rotation sur une unité d'alimentation 3. Les fibres optiques sont guidées par trois poulies 9 fixées à l'entrée d'une tour d'enrobage 12 et sont regroupées en trois groupes 10 comportant chacun neuf fibres. Les trois poulies 9 sont disposées à une distance suffisante les unes des autres pour ne pas gêner le regroupement des fibres optiques.

L'unité d'alimentation 3 représentée sur la figure 1 possède un plan de support 5. Selon une variante, l'unité présente plusieurs plans de support pour faciliter la distribution des fibres optiques à partir des bobines 4.

Le procédé selon l'invention comprend dans un mode particulier de réalisation une étape de coloration des fibres optiques par une unité de coloration insérée entre l'unité d'alimentation 3 et la tour d'enrobage 12 pour permettre une identification de chaque fibre par un code de couleurs.

Les trois groupes de neuf fibres optiques sont ensuite guidés respectivement à travers trois buses 6 disposées en aval des trois poulies 9 dans la tour d'enrobage 12. Chaque buse 6 connue en elle même comprend des orifices par exemple tronconiques ayant un sommet de cône dirigé dans le sens de défilement des fibres optiques. Les trois buses sont disposées parallèlement les unes aux autres dans un arrangement en colonne comme indiqué par la flèche C. Un arrangement des trois buses selon une ligne perpendiculaire au plan de la figure 1 et indiquée par la direction L est également prévu. Un conduit relie chaque orifice à un réservoir d'un matériau d'enrobage. A titre d'exemple, ce matériau est constitué d'une résine à groupements fonctionnels acryliques contenant environ 10% en poids de d'initiateurs sensibles au rayons ultraviolets. Le durcissement de la résine résulte d'une réaction de réticulation, pour laquelle un taux de réticulation est défini par le nombre de groupements fonctionnels acryliques ayant réagis par rapport au nombre initial de groupements. Selon une variante de l'invention, le matériau d'enrobage est une résine thermodurcissable.

Le matériau déposé autour de chaque fibre optique forme par coalescence avec les dépôts de fibres adjacentes une couche continue entourant l'ensemble des fibres optiques destinées à former le ruban correspondant.

Lors d'une deuxième étape du procédé selon l'invention, l'on forme en parallèle plusieurs groupes de fibres optiques dans autant de buses et l'on durcit simultanément ces groupes de fibres optiques enrobées du matériau d'enrobage à travers un unique moyen de durcissement du matériau d'enrobage pour former autant de rubans de fibres optiques.

Sur la figure 1, les trois groupes 10 de neuf fibres optiques enrobées décrits précédemment traversent simultanément une enceinte 8 disposée en aval des trois buses 6 comprenant en série quatre lampes 7 émettant un rayonnement lumineux dans le domaine spectral des ultraviolets. A titre d'exemple, les deux premières lampes disposées à l'entrée de l'enceinte 8 sont d'un type H connu couvrant un domaine spectral allant de 200 nanomètres (nm) à 300 nm et permettant un durcissement en surface de la couche du matériau d'enrobage déposé sur les fibres optiques. Les deux dernières lampes sont d'un type D également connu couvrant un domaine spectral allant de 300 nanomètres (nm) à 450 nm et permettant un durcissement en épaisseur de la couche d'enrobage. Les quatre lampes ont une densité surfacique de puissance de 120 watts par centimètres carrés (W/cm²) et conduisent à un taux de réticulation par ruban de 70% de la couche de résine à groupements fonctionnels acryliques déposée sur les fibres optiques.

Dans les lampes H et D, l'énergie rayonnée est concentrée par un réflecteur de forme elliptique dans une zone sensiblement circulaire définie par un diamètre focal. Différents diamètres focaux sont disponibles selon le réflecteur utilisé dans les lampes. Le procédé selon l'invention tire avantageusement partie des différents diamètres focaux pour apporter une énergie nécessaire et suffisante au durcissement du matériau d'enrobage, en choisissant un diamètre focal en fonction du nombre de rubans traversant simultanément l'enceinte de durcissement.

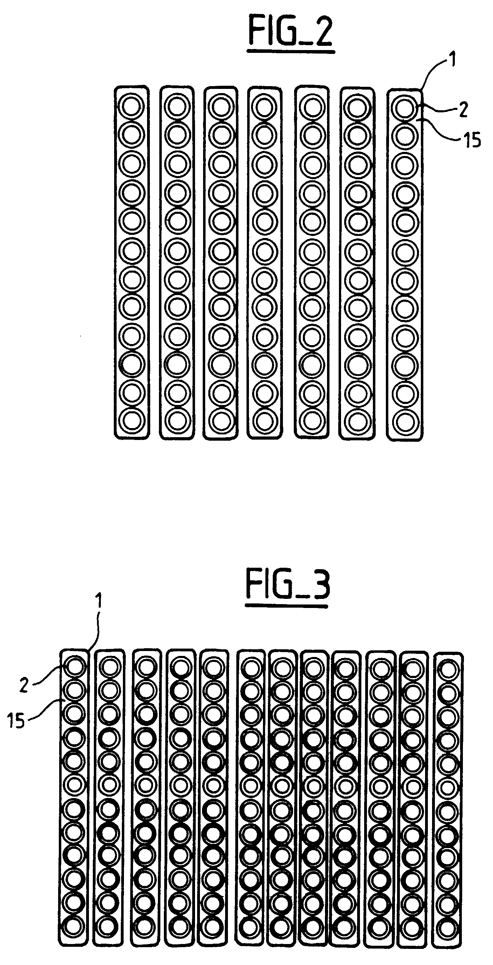

Sur les figures 2 et 3 sont représentés respectivement sept et douze rubans 1 disposés parallèlement les uns aux autres dans un arrangement en colonne correspondant à un arrangement identique des sept et des douze buses dont ils sont issus. Chaque ruban comprend douze fibres optiques 2 enrobées d'un matériau d'enrobage 15 et possède en coupe transversale, une largeur égale à 3,10 millimètres (mm) et une épaisseur égale à 0,31 mm. Ces rubans sont durcis simultanément par une enceinte de durcissement conforme à celle décrite précédemment et dans laquelle les lampes sont utilisées avec un réflecteur réglant un diamètre focal respectivement égal à 6 mm et 9 mm.

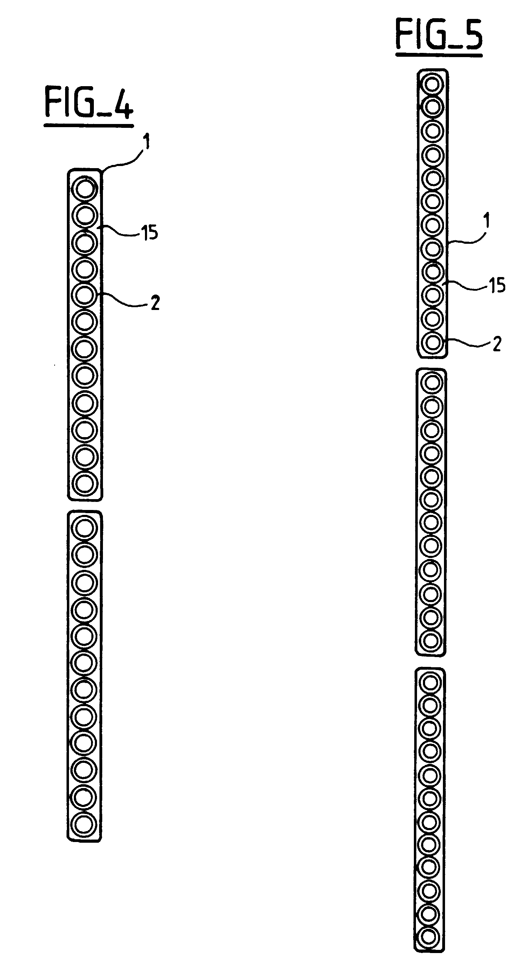

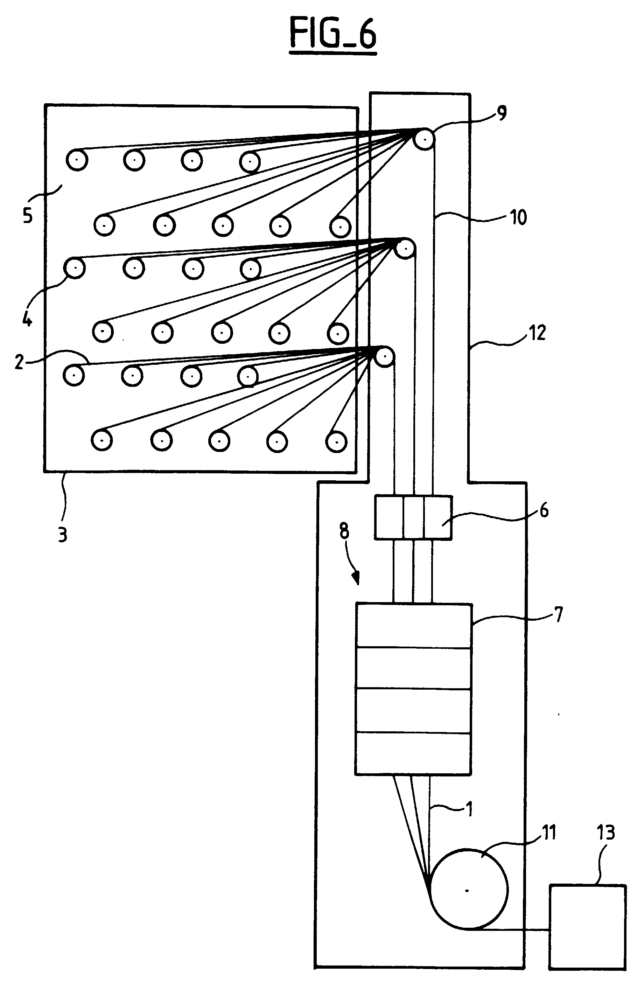

Sur les figures 4 et 5 sont représentés respectivement deux et trois rubans 1 disposés dans un arrangement en ligne correspondant à un arrangement identique des deux et des trois buses dont ils sont issus. Là encore, ces rubans de même dimension que ceux des figure 2 et 3, sont durcis simultanément par une enceinte de durcissement dans laquelle les lampes sont utilisées avec un réflecteur réglant un diamètre focal respectivement égal à 6 mm et 9 mm.

Selon une variante de l'invention, l'enceinte de durcissement comprend des lampes dont le domaine spectral s'étend aux rayons infrarouges pour permettre un durcissement du matériau d'enrobage constitué par une résine thermodurcissable. Selon une autre variante, l'enceinte de durcissement est reliée à une source de faisceaux d'électrons.

Dans le procédé selon l'invention, il est prévu que les rubans sont guidés par un ou plusieurs cabestans et sont réceptionnés par une ou plusieurs unités de réceptions.

A la sortie de l'enceinte de durcissement 8, figure 1, les trois rubans sont guidés individuellement par des cabestans 11 disposés en sortie de la tour d'enrobage 12 et sont réceptionnés par trois unités de réception 13. Chaque unité connue en elle-même comprend un moteur qui commande en rotation une bobine réceptrice dédiée à un ruban. Les cabestans permettent de régler individuellement une tension de défilement appliquée par le moteur de chaque bobine réceptrice au ruban et au groupe de fibres optiques correspondant. A titre d'exemple, la vitesse de rotation des bobines de réceptions correspond à une vitesse de fabrication des rubans comprise entre 50 et 1000 mètres par minute.

D'une façon avantageuse, la réception des trois rubans est réalisée, figure 4, par un cabestan 11 et une unité de réception 13 communs aux trois rubans, permettant de réduire par ruban le coût de fabrication du procédé selon l'invention.

## Revendications

1. Un procédé de fabrication de rubans de fibres optiques dans lequel les fibres optiques (2) sont distribuées par une unité de distribution (3) de fibres optiques et regroupées dans une buse (6) où elles sont enrobées par un matériau d'enrobage (15) qui est durci pour former un ruban (1) de fibres optiques (2), caractérisé en ce que l'on forme en parallèle plusieurs groupes (10) de fibres optiques dans autant de buses (6) et que l'on durcit simultanément ces groupes de fibres optiques enrobées du matériau d'enrobage (15) à travers un unique moyen de durcissement (8) du matériau d'enrobage (15) pour former autant de rubans (1) de fibres optiques (2).

2. Le procédé selon la revendication 1, dans lequel les fibres optiques (2) sont enrobées d'une résine dont le durcissement est provoqué par exposition à des rayons ultraviolets.

3. Le procédé selon la revendication 2, dans lequel le durcissement est réalisé dans une enceinte (8) comprenant au moins une lampe (7) à rayons ultraviolets.

4. Le procédé selon la revendication 1, dans lequel les fibres optiques (2) sont enrobées d'une résine thermodurcissable.

5. Le procédé selon la revendication 4, dans lequel le durcissement est réalisé dans une enceinte (8) comprenant au moins une lampe à rayons s'étendant des ultraviolets aux infrarouges.

6. Le procédé selon la revendication 4, dans lequel le durcissement est réalisé dans une enceinte (8) reliée à une source de faisceaux d'électrons.

7. Le procédé selon l'une des revendications 1 à 6, dans lequel les rubans (1) sont guidés par un ou plusieurs cabestans (11) et réceptionnés par une ou plusieurs unités de réceptions (13).

8. Le procédé selon l'une des revendications 1 à 7, dans lequel les rubans (1) sont issus de buses (6) disposées selon arrangement en lignes et en colonnes.
